# EUROPÄISCHE PATENTANMELDUNG

(11) **EP 0 547 433 A1**
(43) Veröffentlichungstag der Anmeldung: **23.06.1993**
(21) Anmeldenummer: 92120532.4
(22) Anmeldetag: 02.12.1992
(51) Int. Cl.: C04B 28/18

(54) **Verfahren zur Herstellung von calcium-hydrosilikatgebundenen Formkörpern**

(30) Priorität: 14.12.1991 DE 4141271
(71) Anmelder: SICOWA Verfahrenstechnik für Baustoffe GmbH & Co. KG, D-52072 Aachen (DE)
(72) Erfinder: Koslowski, Thomas, Dr., W-5100 Aachen (DE); Hessler, Klaus-Michael, W-5120 Herzogenrath 3 (DE); Musebrink, Olaf, W-5132 Übach-Palenberg (DE)
(74) Vertreter: Sparing Röhl Henseler Patentanwälte

(57) **Zusammenfassung**

Die Erfindung betrifft ein Verfahren zur Herstellung von calciumhydro-silikatgebundenen Formkörpern, wobei eine Rohmischung aus Quarzmehl, ungelöschtem bzw. gelöschtem Kalk und/oder Portlandzement und gegebenenfalls einem wärmeaktivierbaren Erstarrungsbeschleuniger, einem porenbildenden Mittel sowie Wasser und gegebenenfalls weiterer Additive gemischt, die Rohmischung zu Rohlingen geformt und die Rohlinge nach Erreichen einer genügenden Festigkeit autoklaviert werden. Zur Reststoffverwertung ist vorgesehen, daß als porenbildendes Mittel in einem Pulper aufgeschlossener Altpapierschlamm aus Fasern bzw. Faserbestandteilen geringer Länge verwendet wird.

## Beschreibung

Die Erfindung betrifft ein Verfahren zur Herstellung von calciumhydrosilikatgebundenen Formkörpern, wobei eine Rohmischung aus Quarzmehl, ungelöschtem bzw. gelöschtem Kalk und/oder Portlandzement und gegebenenfalls einem wärmeaktivierbaren Erstarrungsbeschleuniger, einem porenbildenden Mittel sowie Wasser und gegebenenfalls weiterer Additive gemischt, die Rohmischung zu Rohlingen geformt und die Rohlinge nach Erreichen einer genügenden Festigkeit autoklaviert werden.

Ein derartiges Verfahren ist beispielsweise aus der EP-C-0 038 552 oder der EP-C-0 119 662 bekannt. Bei letzterer wird eine Rohmischung aus SiO₂-haltigem Mehl (Quarzmehl, Flugasche o.dgl.), Kalkhydrat, einem wärmeaktivierbaren Erstarrungsbeschleuniger (z.B. Tonerdezement, Zitronensäureanhydrit, wasserhaltiges und wasserfreies Calciumsulfat) und ferner Portlandzement, einem porenbildenden Mittel sowie Wasser und gegebenenfalls weiterer Additive gemischt, die Rohmischung in einer Bandstrangformanlage unter Erwärmung zu einem Strang geformt und der die Bandstrangformanlage verlassende, verfestigte Strang in eigenstabile Rohlinge zerschnitten wird, die autoklaviert werden. Als porenbildendes Mittel wird hierbei ein vorgefertigter Schaum beispielsweise auf Eiweißbasis verwendet, mit dem die Rohmischung porosiert wird. Auf diese Weise lassen sich zersägbare Kalksandsteinleichtsteine und andere -formkörper mit niedrigen Rohdichten z.B. von 400 bis 1000 kg/m³, sehr hohen Druckfestigkeiten bis 25 N/mm², ausgezeichnetem Wärmedämmvermögen, niedrigen Schwind- und Kriechwerten und niedriger kapillarer Wasseraufnahme herstellen.

Außerdem ist es bekannt, Porenbetonformkörper auf ähnliche Weise herzustellen, indem Quarzmehl o.dgl. mit Portlandzement, ungelöschtem Kalk und Wasser sowie einem Porenbildner (Al-Pulver) oder einem vorgefertigten Schaum gemischt und die so hergestellte Rohmischung in eine Form gegossen wird. Nachdem die Rohmischung genügend verfestigt ist, wird diese in vertikaler und horizontaler Richtung in Rohlinge zerschnitten, die anschließend autoklaviert werden. Auch hierdurch lassen sich zersägbare Formkörper mit niedrigen Rohdichten, hohen Druckfestigkeiten und ausgezeichnetem Wärmedämmvermögen herstellen.

Heutzutage wird Altpapier gesammelt und wiederverwertet, indem daraus Recyclingpapier hergestellt wird. Letzteres gelangt wiederum ins Altpapier und führt dazu, daß nach mehrmaligem Recycling hiervon ein Altpapierschlamm übrig bleibt, der wegen seiner geringen Faserlänge für die Herstellung von Recyclingpapier nicht mehr geeignet ist und daher einen zu verbrennenden oder zu deponierenden Abfall darstellt.

Zwar ist es bekannt, Cellulosefasern (z.B. Kraftzellulose, die u.a. als Asbestersatz dient) in Produkten wie Gips-, Zement- oder Calciumsilikat gebundene Faserplatten, etwa Fassadenplatten u.dgl. einzusetzen, vgl. beispielsweise DE-A-2 832 125, jedoch geht es hierbei nicht um eine Reststoffverwertung, sondern darum, den Produkten gewisse Eigenschaften wie erhöhte Biegezugfestigkeiten zu verleihen, wobei die Verstärkungseigenschaften der Fasern genutzt werden, wozu eine Mindestfaserlänge benötigt wird, die ein nach mehrmaligem Recycling übrig bleibender Altpapierschlamm in keiner Weise besitzt, so daß dieser für einen solchen Zweck völlig ungeeignet wäre. Abgesehen davon wird hierbei das Rohmaterial zu Platten oder dergleichen mittels Pressen oder Wickelmaschinen geformt, um eine Grünlingsfestigkeit zu erreichen und die Porosität zu verringern.

Aufgabe der Erfindung ist es, einen Verfahren nach dem Oberbegriff des Anspruchs 1 zu schaffen, das es ermöglicht, Reststoffe zu verwerten.

Diese Aufgabe wird dadurch gelöst, daß als porenbildendes Mittel in einem Pulper aufgeschlossener Altpapierschlamm aus Fasern bzw. Faserbestandteilen geringer Länge verwendet wird.

Durch Verwendung von in einem Pulper aufbereitetem Altpapierschlamm, der eine Faserlänge aufweist, die einen Einsatz als Verstärkungsfasern oder im Recyclingpapier nicht mehr ermöglicht, zum Porosieren einer Rohmischung, aus der porosierte, calciumhydrosilikatgebundene Formkörper hergestellt werden, wird eine günstige Reststoffverwertung ermöglicht. Außerdem führt dieses Porosierungsmittel einerseits zu sehr feinen "mikroskopischen" Poren und andererseits dazu, daß die zersägbaren Formkörper vorteilhafterweise auch zusätzlich nagel- und schraubbar sind.

Hierbei wird der Altpapierschlamm in einem Pulper aufgeschlossen, daß er einen Feststoffgehalt derart aufweist, daß bei einer anschließenden Lagerung in einem Vorratsbehälter o.dgl. keine Entwässerung stattfindet. Dies ist im allgemeinen bei einem Feststoffgehalt von etwa 5 bis 15 Gew.-% der Fall.

Eine Rohmischung aus SiO₂-haltigem Mehl, etwa Quarzmehl, Flugasche o.dgl., sowie Portlandzement und/oder Kalkhydrat und einem wärmeaktivierbaren Erstarrungbeschleuniger wird hergestellt und mit dem aufgeschlossenen Altpapierschlamm in einer Menge, die sich nach der gewünschten Rohdichte der fertigen Formkörper richtet, die beispielsweise im Bereich von 400 bis 1000 kg/m³ liegt, vermischt. Die Rohmischung kann in einer Bandstrangformanlage zu einem Strang geformt werden, wobei durch entsprechende Erwärmung beispielsweise mittels Hochfrequenz der Erstarrungsbeschleuniger aktiviert wird, so daß sich der Strang verfestigt. Der die Bandstrangformanlage verlassende, verfestigte Strang wird dann in eigenstabile Rohlinge zerschnitten, die anschließend auf Härtewagen gestapelt in einem Autoklaven in Sattdampfatmosphäre von beispielsweise 16 bar gehärtet werden.

Stattdessen kann auch mit ungelöschtem Kalk und Portlandzement wie beim Porenbeton und damit gegebenenfalls ohne wärmeaktivierbaren Schnellzement gearbeitet werden, wobei dann die Rohmischung in eine Form gefüllt und über die Löschwärme des Kalks eine eine Verfestigung bewirkende Hydratationsreaktion des Portlandzements ausgelöst wird, die zum Erstarren der Rohmischung führt. Allerdings findet hierbei nicht die bei der Porenbetonherstellung übliche Ausdehnung infolge der Gasblasenbildung eines Porenbildners statt, da dieser fehlt und durch den aufgeschlossenen Altpapierschlamm ersetzt ist, so daß sich lediglich eine relativ geringe Ausdehnung aufgrund der Löschwärme ergibt. Nach dem Entformen erfolgt dann wiederum ein Zerschneiden in eigenstabile Rohlinge und Autoklavieren derselben.

## Patentansprüche

1. Verfahren zur Herstellung von calciumhydrosilikatgebundenen Formkörpern, wobei eine Rohmischung aus Quarzmehl, ungelöschtem bzw. gelöschtem Kalk und/oder Portlandzement und gegebenenfalls einem wärmeaktivierbaren Erstarrungsbeschleuniger, einem porenbildenden Mittel sowie Wasser und gegebenenfalls weiterer Additive gemischt, die Rohmischung zu Rohlingen geformt und die Rohlinge nach Erreichen einer genügenden Festigkeit autoklaviert werden, dadurch **gekennzeichnet,** daß als porenbildendes Mittel in einem Pulper aufgeschlossener Altpapierschlamm aus Fasern bzw. Faserbestandteilen geringer Länge verwendet wird.

2. Verfahren nach Anspruch 1, dadurch gekennzeichnet, daß die Rohmischung in einer Bandstrangformanlage unter Erwärmung zu einem Strang geformt und der die Bandstrangformanlage verlassende, verfestigte Strang in Rohlinge zerschnitten wird.

3. Verfahren nach Anspruch 1 oder 2, dadurch gekennzeichnet, daß die Rohmischung in einzelne Formen gefüllt und nach Verfestigung entformt und gegebenenfalls zerschnitten wird.
